(19) Europäisches Patentamt
European Patent Office
Office européen des brevets

(11) EP 2 653 499 A1

(12) EUROPEAN PATENT APPLICATION
published in accordance with Art. 153(4) EPC

(43) Date of publication:
**23.10.2013 Bulletin 2013/43**

(21) Application number: **11848434.4**

(22) Date of filing: **12.12.2011**

(51) Int Cl.:
***C08L 67/04*** (2006.01) ***B29C 51/10*** (2006.01)
***B29C 55/12*** (2006.01) ***C08J 5/18*** (2006.01)
***C08K 5/521*** (2006.01) ***C08L 101/16*** (2006.01)

(86) International application number:
**PCT/JP2011/078650**

(87) International publication number:
**WO 2012/081532 (21.06.2012 Gazette 2012/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2010 JP 2010277566**
**27.07.2011 JP 2011164649**

(71) Applicant: **Kao Corporation**
**Chuo-ku**
**Tokyo 103-8210 (JP)**

(72) Inventors:
- **OKUTSU, Munehisa**
  **Wakayama 640-8580 (JP)**
- **HASHIMOTO, Ryoichi**
  **Wakayama 640-8580 (JP)**

(74) Representative: **HOFFMANN EITLE**
**Patent- und Rechtsanwälte**
**Arabellastrasse 4**
**81925 München (DE)**

# (54) POLYLACTIC ACID RESIN COMPOSITION

(57) A polylactic acid resin composition containing a polylactic acid resin; and a compound represented by the formula (I), the compound being contained in an amount of from 0.1 to 30 parts by weight, based on 100 parts by weight of the polylactic acid resin; a sheet obtained with the composition, a stretched film or thermoformed article obtained by secondary forming of the sheet; and a wrapping material made of the stretched film or thermoformed article. The polylactic acid resin composition of the present invention can be suitably used in various industrial applications, such as daily sundries, household electric appliance parts, and automobile parts.

EP 2 653 499 A1

## Description

### TECHNICAL FIELD

The present invention relates to a polylactic acid resin composition. More specifically, the present invention relates to a polylactic acid resin composition having improved secondary formability, and especially stretchability and thermoforming property, a sheet obtainable with the composition, a formed article such as a stretched film or a thermoformed article, obtainable by subjecting the sheet to a secondary forming, a method for secondary forming of the sheet, and a wrapping material made of a stretched film or a formed article.

### BACKGROUND ART

In films utilized in various wrapping applications such as food wrappings, since stretched films made of crystalline polyester resins represented by polyethylene terephthalate, PET, have excellent mechanical properties such as strength as well as transparency, the stretched films have been applied to diversified uses such as general wrapping materials.
In the production of stretched films made of the crystalline polyester resins, a method including subjecting a sheet in an amorphous state or semi-crystalline state produced generally by extrusion molding or the like to secondary stretching to an intended thickness within a temperature range of from a glass transition temperature Tg to a cold crystallization temperature Tc, and subsequently heat-treating the resulting stretched product has been employed. In the above stretching step, the molecular orientation advances, so that improvements in mechanical properties such as strength have been made, for example, see Non-Patent Publication 1.
In the recent years, with an increased awareness for the environmental protection, the developments of environmental-friendly resin films having excellent biodegradability are in progress, among which many studies have been made for polylactic acid resins as environmental-friendly resins having excellent biodegradability.
However, polylactic acid resins have not only physical properties that are rigid and brittle, but also low secondary formability, so that in cases where the polylactic acid resins are formed into sheets, films, etc., there are some disadvantages that the formed products are deficient in flexibility, that whitening takes place in the formed products upon bending, etc. In addition, since the formed products are less likely to be easily stretched, they are known to have difficulty in improving the mechanical properties by the stretching orientation, for example, see Non- Patent Publication 2.
Because of these disadvantages, in the current situations, the formed articles made of polylactic acid resins are limited in use primarily in the fields of rigid formed articles. In view of the above, methods including adding various plasticizers in order to make up for the above disadvantages have been tried.
For example, it has been tried to use lactic acid, a lactic acid oligomer, an aliphatic polycarboxylic acid ester, a copolymer of a polylactic acid and a polyalkylene ether or the like as a plasticizer, from the viewpoint of affinity with the polylactic acid resin and suppression of bleed-out property. However, the above plasticizer has some disadvantages that the plasticizer has low thermal stability during molding, so that the resulting film has a worsened strength, that the improvement in secondary formability is insufficient, or results in bleed-out, and the like, whereby especially their applications to stretched films have been difficult.
On the other hand, in general resin compositions, methods including adding various phosphoric esters which are mainly used as lubricants or flame retardants to a polylactic acid resin composition, thereby improving physical properties and formability of the composition have been disclosed. However, the above phosphoric esters are mostly aromatic phosphoric esters, and therefore have poor affinity with the polylactic acid resins, whereby making it difficult to use the composition to general wrapping materials and films, including food wrappings.
In view of the above, it has been tried to add an aliphatic phosphoric ester, whereby formability of the polylactic acid resins can be improved. For example, Patent Publication 1 discloses that a method in which an aliphatic phosphoric ester compound etc. of which aliphatic chain has 12 to 28 carbon atoms is utilized as a lubricant during molding of a polylactic acid resin composition. Patent Publication 2 discloses that an aliphatic phosphoric triester is added as a plasticizer, whereby stretching formability in the production of porous sheets can be improved.
However, since the long- chained aliphatic phosphoric ester disclosed in Patent Publication 1 has low compatibility with a polylactic acid resin, when the crystallization of the polylactic acid resin progresses during molding such as stretching, it is considered that the aliphatic phosphoric ester would easily bleed- out. The aliphatic phosphoric triester of Patent Publication 2 is a compound different from the aliphatic phosphoric ester in the present invention, and as to the stretching formability, since stretching of the sheet in which an inorganic salt, which is a filler, is added to a polylactic acid resin leads to cause interfacial peeling of the resin and a filler, to make the sheet porous, it is considered that the aliphatic phosphoric triester is added mainly for the purpose of improving dispersibility of the above inorganic salt, not for improving stretchability of the polylactic acid resin itself, so that stretchability of the resin itself in the production of stretching film cannot be expected. As described above, additives which are easily compatible with polylactic acid resins, and have high bleed- out resistance, and can further provide polylactic acid resins also having excellent secondary

formability including stretchability when used in food containers, as those utilizable in food wrappings have not been known.

Accordingly, the development of improved techniques of polylactic acid resins that can give a polylactic acid resin sufficient secondary formability such as stretchability, and can be utilized as sheets or stretched films for secondary forming is desired. In other words, a plasticizer that can efficiently give a polylactic acid resin flexibility and stretchability, thereby making it possible to produce a stretched film, and a polylactic acid resin composition containing a plasticizer with little bleed out during molding have been desired.

On the other hand, when a biodegradable resin such as a polylactic acid is applied to a material for a transparent container such as a food container or a wrapping container, in the molding of the above container, it is necessary to carry out a secondary forming called thermoforming, such as pressure forming and vacuum forming using a sheet in an amorphous state, in the same manner as in the production of stretched films. In this case, it is desired that the sheet has a wide formable temperature range in order to sufficiently progress the crystallization, from the viewpoint of stretching the sheet as designed by a die, and improve heat resistance.

Meanwhile, the polylactic acid resins have very narrow temperature ranges that satisfy both secondary formability, including stretchability, mentioned above and crystallization, i.e. formable temperature range in the thermoforming, so that the polylactic acid resins are resins which are difficult to be subject to thermoforming. Therefore, the development of a plasticizer capable of widening a formable temperature range in thermoforming of the polylactic acid resins and capable of improving crystallization has been desired.

PRIOR ART PUBLICATIONS

PATENT PUBLICATIONS

Patent Publication 1: Japanese Patent Laid-Open No. 2002-179899
Patent Publication 2: Japanese Patent Laid-Open No. 2007-112868

NON-PATENT PUBLICATIONS

Non-Patent Publication 1: "Firumu wo Tsukuru (Making Film)" published by Kyoritsu Shuppan, edited by The Society of Polymer Science, Japan, published on February 15, 1993, Chapter 10
Non-Patent Publication 2: DIC Technical Review No. 10, 2004, p.5

SUMMARY OF THE INVENTION

The present invention relates to:

[1] a polylactic acid resin composition containing:

a polylactic acid resin; and
a compound represented by the formula (I):

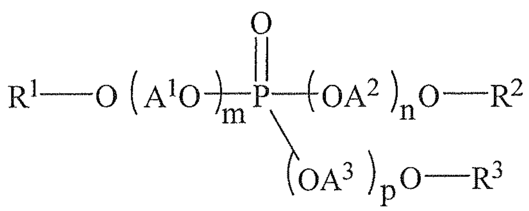

(I)

wherein each of $R^1$, $R^2$, and $R^3$ is independently an alkyl group having from 1 to 4 carbon atoms; each of $A^1$, $A^2$, and $A^3$ is independently an alkylene group having 2 or 3 carbon atoms; each of m, n, and p is independently a positive number showing an average number of moles of oxyalkylene groups added, wherein m + n + p satisfies the number that exceeds 3 and is equal to or less than 12,
the compound being contained in an amount of from 0.1 to 30 parts by weight, based on 100 parts by weight

of the polylactic acid resin;

[2] a sheet containing a polylactic acid resin composition as defined in the above [1], the sheet having a relative degree of crystallinity of 80% or less;
[3] a film produced by biaxially stretching a sheet as defined in the above [2];
[4] a polylactic acid resin formed article obtainable by vacuum forming or pressure forming of a sheet as defined in the above [2];
[5] a method for secondary forming of a sheet, characterized by biaxially stretching a sheet as defined in the above [2];
[6] a method for secondary forming of a sheet, characterized by vacuum forming or pressure forming a sheet as defined in the above [2];.
[7] a wrapping material made of a film as defined in the above [3];
[8] a wrapping material made of a polylactic acid resin formed article as defined in the above [4];
[9] a thermally shrinkable film formed by stretching a sheet as defined in the above [2]; and
[10] a wrapping material made of a thermally shrinkable film as defined in the above [9].

BRIEF DESCRIPTION OF THE DRAWINGS

[Figure 1] Figure 1 shows a die used when evaluating thermoforming property.

DETAILED DESCRIPTION OF THE INVENTION

As a result of the studies made in view of the above circumstances, the present inventors have found that addition of a polyether-form phosphoric triester having a specified structure to a polylactic acid resin gives the polylactic acid resin sufficient secondary formability, especially stretchability and thermoforming property, so that the composition can be very easily formed into a sheet and further to a secondary formed articles such as a stretched film or a thermoformed article, which in turn further gives excellent strength, transparency, heat resistance and bleeding resistance.
The present invention relates to a polylactic acid resin composition containing an additive capable of giving a polylactic acid resin sufficient secondary formability, the composition having improved secondary formability, especially stretchability and thermoforming property, a sheet obtainable with the composition, a stretched film or a formed article such as a thermoformed article, obtainable by subjecting the sheet to a secondary forming, a method for secondary forming of the sheet, and a wrapping material made of the stretched film or formed article. Also, the present invention relates to a polylactic acid resin composition having excellent strength, transparency, heat resistance and bleeding resistance, a sheet obtainable with the composition, a stretched film or a formed article such as a thermoformed article, obtainable by subjecting the sheet to a secondary forming, a method for secondary forming of the sheet, and a wrapping material made of the stretched film or formed article.
Since the polylactic acid resin composition of the present invention has excellent secondary formability, especially stretchability and thermoforming property, some effects that the composition can be very easily formed into a sheet, or a film or a thermoformed article are exhibited. In addition, since the polylactic acid resin composition has excellent secondary formability, especially stretchability and thermoforming property, the polylactic acid resin composition of the present invention has excellent strength, transparency, heat resistance, and bleeding resistance, which can in turn further give excellent thermal shrinkable property and anti-breaking property can be obtained according to its purposes.
The polylactic acid resin composition of the present invention has a feature in that the composition contains, in addition to a polylactic acid resin, a compound represented by the formula (I):

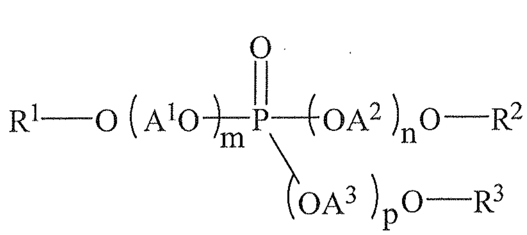

(I)

wherein each of $R^1$, $R^2$, and $R^3$ is independently an alkyl group having from 1 to 4 carbon atoms; each of $A^1$, $A^2$, and $A^3$ is independently an alkylene group having 2 or 3 carbon atoms; each of m, n, and p is independently a positive number showing an average number of moles of oxyalkylene groups added, wherein m + n + p satisfies the number that exceeds 3 and is equal to or less than 12,
from the viewpoint of improving plasticity of the polylactic acid resin.

(Plasticizer)

Since the compound represented by the formula (I) has not only excellent affinity with a polylactic acid resin but also very high plasticizing efficiency as a plasticizer, it is deduced that the secondary formability, especially stretching orientation in the stretching-forming, is improved, that the strength represented by strength at break becomes excellent, that the formable temperature range in thermoforming is widened, and that crystallization velocity is improved, so that the product obtained would have excellent transparency, heat resistance, formability, and fittability.

The compound represented by the formula (I) is a polyether-form phosphoric triester, which may have a symmetric structure or an asymmetric structure, and the phosphoric triester having a symmetric structure is preferred, from the viewpoint of simplicity in the production.

Each of $R^1$, $R^2$, and $R^3$ is independently an alkyl group having from 1 to 4 carbon atoms, which may be linear or branched. Specific examples include a methyl group, an ethyl group, a propyl group, an isopropyl group, a butyl group, and an isobutyl group, and an ethyl group, a propyl group, or a butyl group is preferred. In addition, an alkyl group having 2 or 3 carbon atoms, i.e. an ethyl group or a propyl group, is more preferred, from the viewpoint of improving bleeding resistance and secondary formability.

Each of $A^1$, $A^2$, and $A^3$ is independently an alkylene group having 2 or 3 carbon atoms, which may be linear or branched. Specific examples include an ethylene group, an n-propylene group, and an isopropylene group, among which an ethylene group is preferred, from the viewpoint of improving bleeding resistance and secondary formability. Also, $A^1$, $A^2$, and $A^3$ form oxyalkylene groups, i.e. alkylene oxides, with an adjoining oxygen atom to form a repeating structure in the compound represented by the formula (I).

Each of m, n, and p is independently a positive number showing the number of average moles of oxyalkylene groups added, wherein m + n + p satisfies the number that exceeds 3 and is equal to or less than 12. Among them, m, n, and p are positive numbers, wherein it is preferable that m + n + p satisfies the number that exceeds 3 and is less than 12, and it is more preferable that m + n + p satisfies the number that exceeds 4 and is less than 12, from the viewpoint of giving the polylactic acid resin sufficient secondary formability, and suppressing bleed-out in the formed article obtained. In addition, one that satisfies the number of equal to or greater than 6 and equal to or less than 9 is even more preferred, from the viewpoint of improving bleeding resistance and secondary formability.

Accordingly, the compound represented by the formula (I) is preferably

(1) a compound where each of $R^1$, $R^2$, and $R^3$ is independently an alkyl group having from 1 to 4 carbon atoms; each of $A^1$, $A^2$, and $A^3$ is independently an alkylene group having 2 or 3 carbon atoms; and each of m, n, and p is independently a positive number showing the number of average moles of oxyalkylene groups added, wherein m + n + p satisfies the number that exceeds 3 and is equal to or less than 12, more preferably

(2) a compound where each of $R^1$, $R^2$, and $R^3$ is independently an alkyl group having from 1 to 4 carbon atoms; each of $A^1$, $A^2$, and $A^3$ is independently an alkylene group having 2 or 3 carbon atoms; and m, n, and p are positive numbers, wherein m + n + p satisfies the number that exceeds 3 and is less than 12, even more preferably

(3) a compound where each of $R^1$, $R^2$, and $R^3$ is independently an alkyl group having from 2 or 3 carbon atoms; all of $A^1$, $A^2$, and $A^3$ are an ethylene group; and m, n, and p are positive numbers, wherein m + n + p satisfies the number that exceeds 4 and is less than 12, and still even more preferably

(4) a compound where each of $R^1$, $R^2$, and $R^3$ is independently an alkyl group having from 2 or 3 carbon atoms; all of $A^1$, $A^2$, and $A^3$ are an ethylene group; and m, n, and p are positive numbers, wherein m + n + p satisfies the number that is equal to or greater than 6 and equal to less than 9.

Specific examples of the compound represented by the formula (I) include symmetric polyether- form phosphoric triesters such as tris (ethoxyethoxyethyl) phosphate represented by the formula (II) :

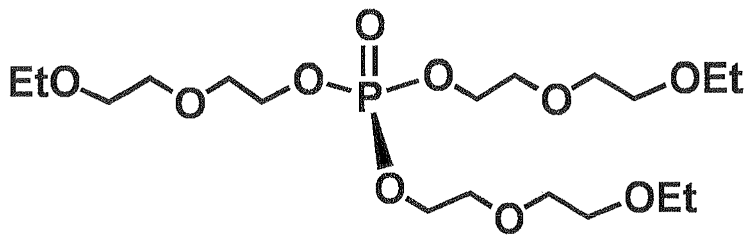

(II)

wherein in the formula (I) all of $R^1$, $R^2$, and $R^3$ are ethyl groups, all of $A^1$, $A^2$, and $A^3$ are ethylene groups, all of m, n, and p are 2, and m+n+p=6,

tris (methoxyethoxyethyl) phosphate, m + n + p = 6, tris (propoxyethoxyethyl) phosphate, m + n + p = 6, tris (butoxyethoxyethyl) phosphate, m + n + p = 6, tris (methoxyethoxyethoxyethyl) phosphate, m + n + p = 9, tris (ethoxyethoxyethoxyethyl) phosphate, m + n + p = 9, and tris (propoxyethoxyethoxyethyl) phosphate, m + n + p = 9; and asymmetric polyether- form phosphoric triesters such as bis (ethoxyethoxyethyl) methoxyethoxyethoxyethyl phosphate, m + n + p = 7, bis (methoxyethoxyethoxyethyl) ethoxyethoxyethyl phosphate, m + n + p = 8, and bis (ethoxyethoxyethyl)- {butoxyethoxyethyl} phosphate, m + n + p = 6; or an asymmetric polyether- form phosphoric ester obtained by triester- phosphorylating a mixture of a polyoxyethylene adduct or polyoxypropylene adduct of an alcohol having 1 to 4 carbon atoms so as to satisfy the formula (I) . Tris (ethoxyethoxyethyl) phosphate, tris (propoxyethoxyethyl) phosphate, tris (ethoxyethoxyethoxyethyl) phosphate, or tris (propoxyethoxyethoxyethyl) phosphate is preferred, and tris (ethoxyethoxyethyl) phosphate is more preferred, from the viewpoint of giving the polylactic acid resin sufficient bleeding resistance and secondary formability.

The compound represented by the formula (I) may be a commercially available product, or a compound synthesized by a known production method. A case where the compound is synthesized by a known production method will be explained hereinbelow.

The polyether- form phosphoric triester can be synthesized by, for example, a method disclosed in Japanese Patent Laid- Open No. Hei- 10- 17581. Specifically, a phosphoric triester can be produced with a very good selectivity by reacting one or more organic hydroxy compounds represented by the formula (III) :

$$R\text{- }O\,(AO)_nH \qquad \text{(III)}$$

wherein R is an alkyl group having from 1 to 4 carbon atoms; A is an alkylene group having 2 or 3 carbon atoms; n number of A's may be identical or different, wherein n shows the number of average moles of alkylene oxides added, which is the number of from 2 to 4,
sequentially or at once with a phosphorus oxyhalide, while removing a hydrogen halide produced as a by- product to the external of the reaction system. As the method of removing a hydrogen halide produced as a by- product to an external of the reaction system, a method of allowing the hydrogen halide to contact an inert gas such as dry nitrogen gas, or a method of removing the hydrogen halide to an external of the system under a reduced pressure is effective.

The content of the compound represented by the formula (I) is from 0.1 to 30 parts by weight, preferably from 0.5 to 30 parts by weight, more preferably from 1.0 to 10 parts by weight, even more preferably from 2.0 to 8.0 parts by weight, and still even more preferably from 3.0 to 7.0 parts by weight, based on 100 parts by weight of the polylactic acid resin. When the content is 0.1 parts by weight or more, an effect of improving plasticization of the compound represented by the formula (I) is favorably exhibited, and when the content is 30 parts by weight or less, the resin composition would not be too soft, thereby making handling in the secondary forming favorable.

In addition, the polylactic acid resin composition of the present invention can contain other plasticizers besides the compound represented by the formula (I) within the range that would not impair the effects of the present invention.

Other plasticizers include specifically polycarboxylic acid esters, such as phthalic acid esters, succinic acid esters, and adipic acid esters, and aliphatic esters of polyols such as glycerol, which are conventional plasticizers. Among them, it is preferable to use a succinic acid ester disclosed in Japanese Patent Laid-Open No. 2006-176748, from the viewpoint of addition effects of the plasticizer and improvement in bleeding resistance. The content of these plasticizers is preferably 10 parts by weight or less, more preferably 5 parts by weight or less, and even more preferably 1 part by weight or less, based on 100 parts by weight of the polylactic acid resin, from the viewpoint of not inhibiting the effects of the present invention. In addition, the content of the compound represented by the formula (I) is preferably 30% by weight or more, more preferably 60% by weight or more, even more preferably 70% by weight or more, even more preferably 80% by weight or more, even more preferably 90% by weight or more, and still even more preferably substantially 100% by weight, of the entire plasticizers, from the viewpoint of improving secondary formability stretchability. Here, the entire plasticizers mean combined plasticizers of the compound represented by the formula (I) and other plasticizers that are contained in the composition.

(Polylactic Acid Resin)

The polylactic acid resin includes commercially available polylactic acid resins, including, for example, those manufactured by Mitsui Chemicals, Inc. under the trade names of LACEA H-100, H-280, H-400, H-440 etc., those manufactured by Nature Works under the trade names of Nature Works PLA/NW3001D, NW4032D etc., and polylactic acid resins synthesized from lactic acid and lactide. A polylactic acid resin having an optical purity of 90% or more is preferred, from the viewpoint of improving strength and heat resistance. For example, a polylactic acid resin manufactured by Nature Works having a relatively high molecular weight and a high optical purity, NW4032D etc., is preferred.

In addition, in the present invention, as the polylactic acid resin, a stereocomplex polylactic acid, composed of two kinds of polylactic acids, each obtained from a lactic acid component containing an isomer different from one another as a main component, may be used, from the viewpoint of satisfying both strength and flexibility of the polylactic acid

resin composition, and improving heat resistance and transparency of the polylactic acid resin composition.

One polylactic acid constituting the stereocomplex polylactic acid, which is hereinafter referred to as "polylactic acid (A)," contains L-form in an amount of from 90 to 100% by mol, and other component including D-form in an amount of from 0 to 10% by mol. The other polylactic acid, which is hereinafter referred to as "polylactic acid (B)," contains D-form in an amount of from 90 to 100% by mol, and other component including L-form in an amount of from 0 to 10% by mol. Other components besides L-form and the D-form include dicarboxylic acids, polyhydric alcohols, hydroxycarboxylic acids, lactone, and the like, each having a functional group capable of forming two or more ester bonds. Also, other components may be a polyester, a polyether, a polycarbonate, or the like, each having two or more unreacted functional groups mentioned above in one molecule.

The polylactic acid (A) and the polylactic acid (B) in the stereocomplex polylactic acid are in a weight ratio, i.e. polylactic acid (A)/polylactic acid (B), of preferably from 10/90 to 90/10, more preferably from 20/80 to 80/20, and even more preferably from 40/60 to 60/40.

In addition, the polylactic acid resin composition of the present invention can further contain, in addition to the polylactic acid resin and the plasticizer including the compound represented by the formula (I), a crystal nucleating agent or a hydrolysis inhibitor. Specifically, one embodiment of the polylactic acid resin composition of the present invention includes a composition containing a polylactic acid resin, a plasticizer including a compound represented by the formula (I), a crystal nucleating agent, and a hydrolysis inhibitor.

The crystal nucleating agent includes inorganic crystal nucleating agents such as natural or synthetic silicate compounds, metal salts such as titanium oxide, barium sulfate, tricalcium phosphate, calcium carbonate, and sodium phosphate, kaolinite, halloysite, talc, smectite, vermiculite, and mica; and organic crystal nucleating agents such as ethylenebis fatty acid amides, propylenebis fatty acid amides, butylenebis fatty acid amides, and the like, and metal salts of phenylphosphonic acids and the like. The organic crystal nucleating agents are preferred, from the viewpoint of improving transparency, and alkylenebis fatty acid amides such as ethylenebis fatty acid amides such as ethylenebis stearic amide and ethylenebis oleic amide, propylenebis fatty acid amides, and butylenebis fatty acid amides are more preferred, and alkylenebis hydroxyfatty acid amides such as ethylenebis 12-hydroxystearic amide are even more preferred.

The content of the crystal nucleating agent is preferably from 0.1 to 1.0 part by weight, and more preferably from 0.1 to 0.5 parts by weight, based on 100 parts by weight of the polylactic acid resin, from the viewpoint of improving transparency of the polylactic acid resin composition, or the formed products obtained with the polylactic acid resin composition, including sheets, films, or thermoformed products.

The hydrolysis inhibitor includes carbodiimide compounds such as polycarbodiimide compounds and monocarbodiimide compounds, and the polycarbodiimide compounds are preferred from the viewpoint of improving durability and impact resistance of the polylactic acid resin composition, and the monocarbodiimide compounds are preferred from the viewpoint of improving durability and formability of the polylactic acid resin composition. It is preferable that the monocarbodiimide and the polycarbodiimide are used together, from the viewpoint of even more improving durability, impact resistance, and formability of the formed article made of the polylactic acid resin composition.

The polycarbodiimide compound includes poly (4, 4'- diphenylmethanecarbodiimide), poly (4, 4'- dicyclohexylmethanecarbodiimide), poly (1, 3, 5- triisopropylbenzene) polycarbodiimide, poly (1, 3, 5- triisopropylbenzene and 1, 5- diisopropylbenzene) polycarbodiimide, and the like. The monocarbodiimide compound includes N, N'- di- 2, 6- diisopropylphenylcarbodiimide, and the like.

In order to satisfy durability, impact resistance, and formability of the formed article made of the polylactic acid resin composition, the above- mentioned carbodiimide compounds may be used alone or in a combination of two or more kinds. In addition, as the poly (4, 4'- dicyclohexylmethanecarbodiimide), Carbodilite LA- 1 manufactured by Nisshin Boseki can be used; as the poly (1, 3, 5- triisopropylbenzene) polycarbodiimide and poly (1, 3, 5- triisopropylbenzene and 1, 5- diisopropylbenzene) polycarbodiimide, Stabaxol P and Stabaxol P- 100 manufactured by Rhein Chemie can be used; and as N, N'- di- 2, 6- diisopropylphenylcarbodiimide, Stabaxol 1 manufactured by Rhein Chemie can be used, respectively. Among these carbodiimide compounds, the poly (4, 4'- dicyclohexylmethanecarbodiimide), manufactured article name: Carbodilite LA- 1 manufactured by Nisshin Boseki is preferred, from the viewpoint of improving transparency of the polylactic acid resin composition, or the formed products obtained with the polylactic acid resin composition, including sheets, films, or thermoformed products.

The content of the hydrolysis inhibitor is preferably from 0.05 to 3 parts by weight, more preferably from 0.10 to 2 parts by weight, and even more preferably from 0.2 to 1 part by weight, based on 100 parts by weight of the polylactic acid resin, from the viewpoint of improving transparency and formability of the formed article made of the polylactic acid resin composition.

The polylactic acid resin composition of the present invention can contain, as other components besides those mentioned above, a resin other than the polylactic acid, a filler including an inorganic filler or an organic filler, a flame retardant, an antioxidant, a lubricant such as a hydrocarbon-based wax or an anionic surfactant, an ultraviolet absorbent, an antistatic agent, an anti-clouding agent, a photostabilizer, a pigment, a mildewproof agent, a bactericidal agent, a

blowing agent, or the like, within the range that would not impair the objective accomplishment of the present invention, in other words, within the range that would not hinder secondary formability such as stretchability or thermoforming property, and transparency as a stretched film. In addition, in the same manner, other polymeric materials and other resin compositions can also be added within the range that would not hinder the effects of the present invention.

The resins other than the polylactic acid resin include polyester resins having biodegradability such as polybutylene succinate, polyhydroxyalkanes, and the like. In addition, the above-mentioned polylactic acid resin may be contained as a polymer alloy formed by a blend of the polylactic acid resin with the other biodegradable resins mentioned above, or with a non-biodegradable resin such as polypropylene. Here, the term "biodegradable or biodegradability" as used herein refers to a property which is capable of being degraded to low molecular compounds by microorganisms in nature. Specifically, the term means biodegradability based on "test on aerobic and ultimate biodegradation degree and disintegration degree under controlled aerobic compost conditions" of JIS K6953, ISO 14855.

The polylactic acid resin composition of the present invention can be prepared without particular limitations, so long as the composition contains the polylactic acid resin and the compound represented by the formula (I). For example, the composition can be prepared by melt-kneading raw materials containing a polylactic acid resin and a compound represented by the formula (I), and further optionally various additives with a known kneader such as a tightly closed kneader, a single-screw or twin-screw extruder, or an open roller kneader. Here, the raw materials can also be subjected to melt-kneading after homogeneously blending the components previously with a Henschel mixer, a super mixer or the like. By melt-kneading the components, the compound represented by the formula (I) acts as a favorable plasticizer for the polylactic acid resin, so that an effect of remarkably lowering a melt viscosity during melt-kneading is exhibited.

The melt-kneading temperature is preferably from 160° to 220°C, more preferably from 170° to 200°C, and even more preferably from 170° to 190°C, from the viewpoint of improving formability and inhibition of deterioration of the polylactic acid resin composition. The melt-kneading time cannot be unconditionally determined because the melt-kneading time depends upon the melt-kneading temperature and the kinds of the kneaders, and the melt-kneading time is preferably from 15 to 900 seconds.

The resulting melt-kneaded mixture has a glass transition temperature Tg of preferably from 30° to 60°C, more preferably from 30° to 55°C, and even more preferably from 35° to 55°C, because the compound represented by the formula (I) effectively acts as a plasticizer.

In addition, the cold crystallization temperature Tc is preferably from 50° to 110°C, more preferably from 50° to 100°C, and even more preferably from 60° to 90°C, because the compound represented by the formula (I) effectively acts as a plasticizer. Here, the glass transition temperature Tg and the cold crystallization temperature Tc of the polylactic acid resin composition can be measured in accordance with the methods described in Examples set forth below.

Since the kneaded mixture thus obtained has excellent secondary formability such as stretchability and thermoforming property, the present invention provides a formed article in an amorphous state or a semi-crystalline state, which can be formed into stretched films, and formed articles having excellent heat resistance, and the like, including for example, a sheet-like formed article. Here, the amorphous state or semi-crystalline state as used herein refers to a case where a relative degree of crystallinity as obtained by a method of Test Example 8 described later is less than 60% is in an amorphous state, and a case where a relative degree of crystallinity is from 60 to 80% is in a semi-crystalline state. Accordingly, the formed article in the amorphous state or semi-crystalline state means a formed article having a relative degree of crystallinity of 80% or less.

The formed article in an amorphous state or semi-crystalline state can be prepared, for example, in a case where a sheet-like formed article is formed, by, subjecting a polylactic acid resin composition of the present invention to extrusion molding or pressure forming.

The extrusion molding is carried out by melting a polylactic acid resin composition of the present invention filled in a heated extruder, and thereafter extruding a molten composition from a T die to provide a sheet-like formed product. This sheet-like formed product is immediately brought into contact with a cooling roller to cool the sheet to a temperature equal to or lower than the Tg of the polylactic acid resin composition to make the sheet in an amorphous state or semi-crystalline state, and subsequently the sheets are removed from the cooling roller, and rolled over with a winding roller to provide a sheet-like formed article. Here, when filled into the extruder, the raw materials constituting the polylactic acid resin of the present invention, for example, raw materials containing a polylactic acid resin and a compound represented by the formula (I), and further optionally various additives are filled, melt-kneaded, and thereafter subjected to extrusion molding.

The temperature of the extruder is preferably from 170° to 240°C, more preferably from 175° to 220°C, and even more preferably from 180° to 210°C, from the viewpoint of homogeneously mixing a polylactic acid resin composition and inhibiting the deterioration of the polylactic acid resin. Also, the temperature of the cooler roller is preferably 40°C or lower, more preferably 30°C or lower, and even more preferably 10°C or lower, from the viewpoint of obtaining a formed article in an amorphous state or a semi-crystalline state. Here, in the present invention, the temperature of the extruder means a barrel setting temperature of the extruder.

In addition, the extrusion rate is preferably from 1 to 200 m/minute, more preferably from 5 to 150 m/minute,

and even more preferably from 10 to 100 m/minute, from the viewpoint of obtaining a formed article in an amorphous state or a semi-crystalline state.

When a sheet-like formed article is formed by press forming, a formed article can be prepared by subjecting a polylactic acid resin composition to put and press into a frame having a sheet-like shape.

As the temperature and pressure of the press forming, when a formed article in an amorphous state or a semi-crystalline state is prepared, it is preferable that the press is carried out, for example, preferably under the conditions of a temperature of from 170° to 240°C and a pressure of from 5 to 30 MPa, more preferably under the conditions of a temperature of from 175° to 220°C and a pressure of from 10 to 25 MPa, and even more preferably under the conditions of a temperature of from 180° to 210°C and a pressure of from 10 to 20 MPa. The press time cannot be unconditionally determined because the time differs depending upon the temperature and pressure of the press. The press time is preferably from 1 to 10 minutes, more preferably from 1 to 7 minutes, and even more preferably from 1 to 5 minutes.

In addition, immediately after the press under the above conditions, it is preferable that the formed article is cooled by subjecting to press preferably under the conditions of a temperature of from 0° to 40°C and a pressure of from 5 to 30 MPa, more preferably under the conditions of a temperature of from 10° to 30°C and a pressure of from 10 to 25 MPa, and even more preferably under the conditions of a temperature of from 10° to 20°C and a pressure of from 10 to 20 MPa. By pressing under the above temperature conditions, a polylactic acid resin composition of the present invention is cooled to a temperature of equal to or lower than its Tg, to make it into an amorphous state or a semi-crystalline state. Therefore, the press time cannot be unconditionally determined because the press time depends upon the press temperature and pressure, and the press time is preferably from 1 to 10 minutes, more preferably from 1 to 7 minutes, and even more preferably from 1 to 5 minutes.

When a sheet-like formed article in an amorphous state or a semi-crystalline state is prepared, its thickness is preferably from 0.1 to 1.5 mm, more preferably from 0.2 to 1.4 mm, and even more preferably from 0.3 to 1.2 mm, from the viewpoint of obtaining a homogeneous formed article, which is a secondary formed product.

The sheet in an amorphous state or a semi-crystalline state thus obtained has excellent bleeding resistance even when an additive such as a crystal nucleating agent or a hydrolysis inhibitor is blended, because the compound represented by the formula (I) has a high effect of plasticizing the polylactic acid resin even when subjected to secondary forming such as stretching or thermoforming, and its affinity is high with the polylactic acid resin. Accordingly, the sheet in an amorphous state or a semi-crystalline state of the present invention is suitably used in applications for secondary forming such as stretching or thermoforming.

In addition, in the present invention, a formed article, which is a secondary formed product, may also be provided by forming a sheet in an amorphous state or a semi-crystalline state of the present invention. Therefore, the present invention also provides a formed article obtainable by secondary forming of a sheet in an amorphous state or a semi-crystalline state of the present invention, which is a secondary formed product, and a method for secondary forming of a sheet in an amorphous state or a semi-crystalline state of the present invention.

Embodiments of the secondary formed products include a film obtained by subjecting a sheet obtained with a polylactic acid resin composition of the present invention to a uniaxial or biaxial stretching, simply referred to as a stretched film of the present invention, and a formed article obtained by vacuum forming or pressure forming a sheet obtained with a polylactic acid resin composition of the present invention, which is also referred to as thermoformed article.

The stretched film can be formed in accordance with a known method without particular limitations. For example, a stretched film is obtained by biaxially stretching a sheet in an amorphous state prepared by the above-mentioned method to a desired thickness in a temperature range from a glass transition temperature Tg to a cold crystallization temperature Tc, and subsequently heat-treating a stretched product, i.e. thermal fixing. In the biaxial stretching, it is possible to form a stretched film by simultaneous stretching or sequential stretching.

The stretched film of the present invention increases mechanical strength by biaxial stretching, thereby showing favorable physical properties as a stretched film. In addition, the stretched film has excellent bleeding resistance and high crystallinity because the plasticization effect by the compound represented by the formula (I) is excellent and its affinity with the polylactic acid resin is high.

In one embodiment of the stretched film, a thermally shrinkable film can be provided. The thermally shrinkable film can be produced in accordance with a known method without particular limitations. A thermally shrinkable film is obtained, for example, by stretching in at least one orientation to a desired thickness, and thereafter substantially not carrying out thermal fixation. As a method of stretching, a uniaxial or biaxial stretching can be carried out. In the case of biaxial stretching, simultaneous stretching or sequential stretching may be carried out. Among them, in the case of sequential stretching, a thermally shrinkable film having a greatly different stretching folds in length and width orientations can be prepared, whereby a stretched film showing more favorable physical properties as a shrinkable label can be obtained.

In addition, a formed article obtained by vacuum forming or pressure forming can be obtained by molding in accordance with a known method. For example, a formed article is obtained by placing a sheet in an amorphous state or a semi-crystalline state of the present invention in a die of a vacuum pressure forming machine, heating the contents

in an internal of the die, and forming the contents while keeping in a pressed state or a non-pressed state.

The die temperature is preferably 120°C or lower, more preferably 115°C or lower, and even more preferably 110°C or lower, from the viewpoint of improving crystallization velocity and improving operability of the polylactic acid resin composition. In addition, the die temperature is preferably 70°C or higher, more preferably 75°C or higher, and even more preferably 80°C or higher. From the above viewpoint, the die temperature is preferably from 70° to 120°C, more preferably from 75° to 115°C, and even more preferably from 80° to 110°C.

The holding time inside the die in, for example a die at 90°C, is preferably from 2 to 60 seconds, more preferably from 3 to 30 seconds, and even more preferably 5 to 20 seconds, from the viewpoint of improving heat resistance and productivity of the formed article made of the polylactic acid resin composition. Since the polylactic acid resin composition of the present invention has a fast crystallization velocity, a formed article having sufficient heat resistance is obtained even with a holding time as short as that mentioned above.

Since in the resulting formed article a sheet in an amorphous state or a semi-crystalline state of the present invention has favorable thermoforming property, the formed article has excellent fittability. In addition, since the plasticization effect by the compound represented by the formula (I) is excellent, the resulting formed article has a high crystallinity, and has excellent heat resistance and transparency.

Here, in the present invention, the sheet in an amorphous state or a semi- crystalline state obtained as mentioned above may be provided as a crystallized sheet by crystallizing the sheet while maintaining the sheet at a temperature of preferably from 60° to 120°C, and more preferably from 70° to 110°C.

The method for secondary forming of a sheet in an amorphous state or a semi-crystalline state of the present invention is not particularly limited, so long as the method is a method for preparing a stretched film or a thermoformed article of the present invention by molding the sheet, and it is as mentioned above.

The stretched film or thermoformed article of the present invention thus obtained has high crystallinity, and has excellent bleeding resistance, heat resistance and transparency, and further has high mechanical strength and fttability, so that the stretched film or thermoformed article can be used in various industrial applications such as daily sundries, household electric appliance parts, packaging materials for household electric appliance parts, and automobile parts, and especially it is suitably used for various wrapping materials such as food wrappings.

## EXAMPLES

The present invention will be explained more specifically hereinbelow by showing Examples and Comparative Examples, without intending to limit the present invention to the Examples set forth below.

### Production Example 1 of Plasticizer - Tris(ethoxyethoxyethyl) Phosphate

A 1-liter four-neck flask was charged with 600 g, 4.47 mol of diethylene glycol monoethyl ether, and the content was stirred under a reduced pressure of 20 kPa, while blowing a dry nitrogen gas at a flow rate of 50 mL per minute. Next, 114 g, 0.745 mol of phosphorus oxychloride was slowly added dropwise while keeping the internal of the reaction system at room temperature of 15°C, and the mixture was then aged at 40° to 60°C for 5 hours. Thereafter, 149 g of a 16% by weight aqueous sodium hydroxide solution was added thereto to neutralize, and an excess unreacted diethylene glycol monoethyl ether was distilled off *in vacuo* under the temperature conditions of from 70° to 120°C. Further, the residue was contacted with steam, to provide 367 g of a crude phosphoric triester. Further, to this crude phosphoric triester was added 300 g of a 16% by weight aqueous sodium chloride solution to wash the crude phosphoric triester. Thereafter, a lower layer of the separated layers was discarded, and the remaining upper layer was dehydrated at 75°C under a reduced pressure, and thereafter further filtered to remove a solid content, to provide 266 g of an intended tris (ethoxyethoxyethyl) phosphate, yield being 80%. This tris(ethoxyethoxyethyl) phosphate was a colorless, transparent homogeneous liquid, and was subjected to chlorine ion analysis. As a result, the tris(ethoxyethoxyethyl) phosphate had a chlorine ion content of 10 mg/kg or less.

### Production Example 2 of Plasticizer - Diester Obtained from Succinic Acid and Triethylene Glycol Monomethyl Ether

A 3- L flask equipped with a stirrer, a thermometer, and a dehydration tube was charged with 500 g of succinic anhydride, 2463 g of triethylene glycol monomethyl ether, and 9.5 g of paratoluenesulfonic acid monohydrate, and the contents were reacted at 110°C for 15 hours under a reduced pressure of from 4 to 10.7 kPa, while blowing nitrogen at 500 mL/min into a space portion. The liquid reaction mixture had an acid value of 1.6 KOH mg/g. To the liquid reaction mixture was added 27 g of an adsorbent KYOWAAD 500SH manufactured by Kyowa Chemical Industry Co., Ltd., and the mixture was stirred at 80°C and 2.7 kPa for 45 minutes, and filtered. Thereafter, triethylene glycol monomethyl ether was distilled off at a liquid temperature of from 115° to 200°C and a pressure of 0.03 kPa, and after cooling to 80°C, the residue was filtered *in vacuo,* to provide a diester obtained from succinic acid and triethylene glycol monomethyl

ether, i.e. $(MeEO_3)_2SA$, as a filtrate. The diester obtained had a weight- average molecular weight of 410, a viscosity at 23°C of 27 mPa•s, an acid value of 0.2 KOH mg/g, a saponification value of 274 KOH mg/g, a hydroxyl value of 1 KOH mg/g or less, and a hue APHA of 200.

Production Example 3 of Plasticizer- Dilauryl Butyl Phosphate In accordance with a method described in Japanese Patent Laid- Open No. Hei- 8- 231565, a compound having the following structure was synthesized.

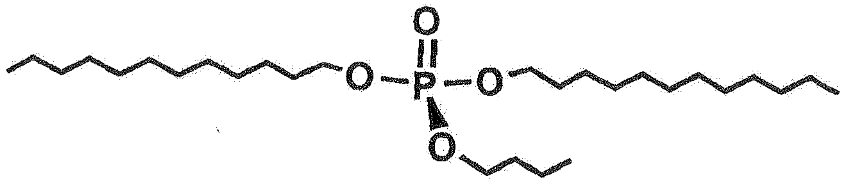

Production Example 4 of Plasticizer - Tris(methoxyethoxyethyl) Phosphate

In reference to a method described in Production Example 1, a compound having the following structure was synthesized.

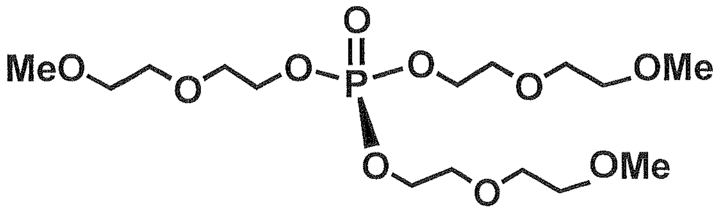

Production Example 5 of Plasticizer-Tris(ethoxyethoxyethoxyethyl) Phosphate

In reference to a method described in Production Example 1, a compound having the following structure was synthesized.

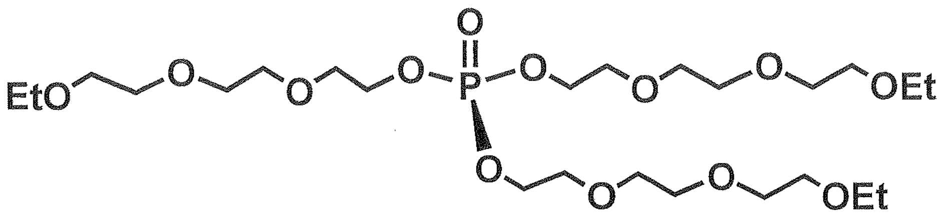

Production Example 6 of Plasticizer - Tris(propoxyethoxyethyl) Phosphate

In reference to a method described in Production Example 1, a compound having the following structure was synthesized.

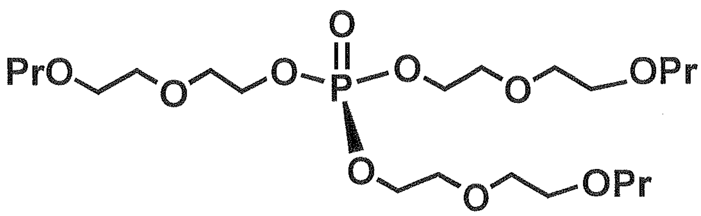

Production Example 7 of Plasticizer - Tris(butoxyethoxyethyl) Phosphate

In reference to a method described in Production Example 1, a compound having the following structure was synthesized.

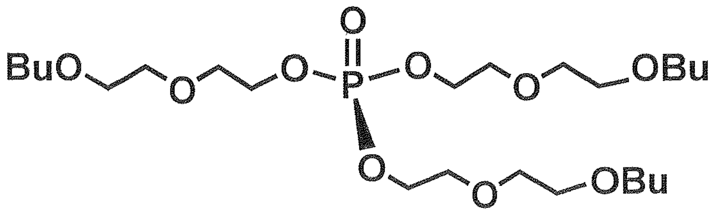

Production Example 8 of Plasticizer - {Bis(ethoxyethoxyethyl)} {Butoxyethoxyethyl} Phosphate)

In accordance with a method described in Japanese Patent Laid-Open No. Hei-8-231565 in the same manner as in Production Example 3, a compound having the following structure was synthesized.

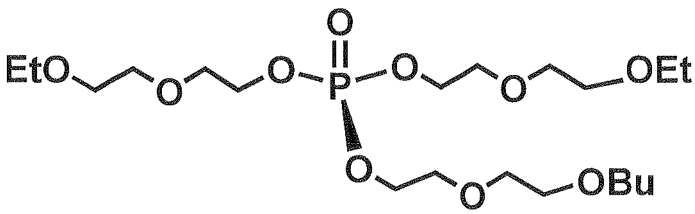

[Other Raw Materials]

Crystal Nucleating Agent: Ethylenebis-12-hydroxystearic amide, manufactured by Nippon Kasei Chemical Co., Ltd. under the trade name of SLIPACKS H
Hydrolysis Inhibitor: Polycarbodiimide, manufactured by Nisshin Boseki under the trade name of Carbodilite LA-1
Plasticizer: Tris(butoxyethyl) phosphate, manufactured by Wako Pure Chemicals Industries, Ltd., reagent, a compound satisfying in the compound represented by the formula (I), all of $R^1$, $R^2$, and $R^3$ are butyl groups, all of $A^1$, $A^2$, and $A^3$ are ethylene groups, and all of m, n, and p are 1, and satisfy $m + n + p = 3$, the compound represented by the following formula:

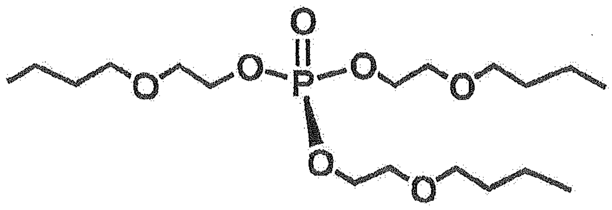

Example 1 and Comparative Examples 1 and 2

A polylactic acid NW4032D manufactured by Nature Works was used in an amount of 50 g, and 5 g of a plasticizer listed in Table 1 was added thereto, and the compositions of Example 1 and Comparative Example 1 were prepared with a small-scale kneader, manufactured by Toyo Seiki, Labo-plastomill 30C150. The melt viscosity during kneading was measured, to evaluate flexibility during kneading. Specifically, the mixture was kneaded at a kneading temperature of 180°C at a rotational speed of 90 rotations per minute for 10 minutes, and torques of the kneader 30 seconds after the beginning of the kneading and 10 minutes after the beginning of the kneading were measured. The results are shown in Table 1.

[Table 1]

Table 1

| | Ex. 1 | Comp. Ex. 1 | Comp. Ex. 2 |
|---|---|---|---|
| Components<br>Polylactic Acid Resin | NW4032D (50) | NW4032D (50) | NW4032D (50) |
| Plasticizer | Tris(ethoxyethoxyethyl) phosphate[1)](5) | Diester of succinic acid and methyl triglycol[2)] (5) | - |
| Properties<br>Torque after 30 seconds from the beginning of the kneading (N•m) | 15 | 15 | 15 |
| Torque after 10 minutes from the beginning of the kneading (N•m) | 6 | 10 | 12 |

* The numerical values inside parenthesis of each of the raw materials shows an amount used (g).
1) Tris(ethoxyethoxyethyl) phosphate obtained in Production Example 1 of Plasticizer
2) Diester of succinic acid and methyl triglycol obtained in Production Example 2 of Plasticizer

From Table 1, in a case of Example 1 where a synthesized polyether-form phosphoric ester was added, the torque was lowered to about one-half as compared to those of a case of Comparative Example 2 where no plasticizers were added, or a case of Comparative Example 1 where a succinic ester was added. It is considered that the reason why the torque of the kneader was lowered is in that the melt viscosity of the composition was lowered, so that the difference in torques, in other words, the difference in melt viscosities, would be greater in absolute values as the kneaders become larger, showing advantages in scale-up formation, so that it could be seen that it is highly excellent as a plasticizer.

Examples 2 and 3 and Comparative Examples 3 and 4

Raw materials listed in Table 2 were added in amounts as listed in Table 2 based on 100 parts by weight of a polylactic acid NW4032D manufactured by Nature Works as a polylactic acid resin, and the mixture was kneaded with a twin-screw extruder HK-25D manufactured by PARKER at a kneading temperature of 180°C at a rotational speed of 90 rotations per minute, and a jetting amount of 10 kg/h to prepare a polylactic acid resin composition.

(1) Preparation of Sheet in Amorphous State

With respect to the resulting polylactic acid resin composition, and the polylactic acid resin composition of a given amount of about 9.3 g was sandwiched using two pieces of stainless steel metal plate with chromium plating, a ferro-plate, and a metallic spacer frame having a thickness of 0.2 mm and inner frame dimensions of 20 cm each side with a height of 1 cm at the center inside the frame. With an auto-press forming machine manufactured by Toyo Seiki (LABOPRESS P2-30T), the polylactic acid resin composition was first pressed at a temperature and a pressure of 180°C and 4 MPa for 2 minutes, and further continued pressing at a temperature and a pressure of 180°C and 20 MPa for 2 minutes. Thereafter, the pressed composition was immediately rapidly cooled at 15.5°C/second to room temperature of 25°C with a cooling device of the auto-press forming machine to provide a sheet with a thickness of 0.2 mm. Here, the sheet used in the evaluation of secondary formability, including fittability having a thickness of 0.4 mm was prepared in the same manner except that the amount of the polylactic acid resin composition was changed to 22 g, that the thickness was changed to 0.4 mm, and that a metallic spacer frame having inner frame dimensions of 20 cm each side with a height of 1 cm was used.

(2) Preparation of Sheet in Crystalline State

With respect to the resulting polylactic acid resin composition, the polylactic acid resin composition of a given amount of about 20 g was sandwiched using two pieces of stainless steel metal plate with chromium plating, a ferro plate and a metallic spacer frame having a thickness of 0.4 mm and inner frame dimensions of 20 cm each side with a height of 1 cm, at the center inside the frame. With an auto-press forming machine manufactured by Toyo Seiki, the

polylactic acid resin composition was first pressed at a temperature and a pressure of 180°C and 4 MPa for 2 minutes, and further continued pressing at a temperature and a pressure of 180°C and 20 MPa for 2 minutes. Thereafter, the pressed composition was immediately rapidly cooled to room temperature of 25°C at 15.5°C/second, with a cooling device P2-30T, manufactured by Labopress of the auto-press forming machine to provide a sheet-like formed article. The resulting sheet-like formed article was further pressed at a temperature and a pressure of 80°C and 10 MPa for 3 minutes, and then allowed to air-cool to room temperature. The formed article was taken out of the spacer frame to provide a sheet having 20 cm each side with a thickness of 0.4 mm.

The properties were evaluated for each of the resulting compositions and sheets in accordance with the following Test Examples 1 to 8. The results are shown in Table 2.

Test Example 1 < Measurements of Glass Transition Temperature and Cold Crystallization Temperature >

A glass transition temperature, °C, and a cold crystallization temperature, °C, were measured for each of the compositions used in the production of sheets. Here, the heating conditions were such that a composition was heated from 25° to 200°C at 15°C per minute, and the amount of the measurement sample was 7.5 mg. It is shown that the lower the cold crystallization temperature °C, the greater the crystallization velocity.

Test Example 2 < Evaluation of Secondary Formability Including Stretchability >

The sheet in an amorphous state of each of the compositions was cut out into a rectangular shape of 12 cm × 10 cm with a thickness of 0.2 mm, and 1 cm each on a length side of the sheet was sandwiched with a table tenter testing machine manufactured by Iwamoto Seisakusho, and subj ected to a uniaxial stretching with a free width at a stretching temperature of 58°C and a stretching rate of 5 mm/s, and whitening and breaking elongation folds [whitening elongation %, breaking elongation %] were observed. Here, only in Comparative Example 4 where a plasticizer was not contained, the sheet was stretched at a stretching temperature of 80°C. In a case where the sheet did not break even at a breaking elongation of 450%, it was denoted as "> 450%." This stretchability is one of the important indexes in evaluating the secondary formability, and it is judged that the higher the numerical values for elongation, the more favorable the secondary formability of the sheet.

Test Example 3 < Evaluation of Bleeding Resistance >

The sheet surface was visually observed for the crystalline sheets of each the compositions, and the presence or absence of bleed-out was confirmed. A case where bleed out was not confirmed at all was ranked "A"; a case where bleed-out was slightly confirmed was ranked "B"; and a case where bleed-out was confirmed in many instances was ranked "C." Incidentally, as to Comparative Example 4, raw materials other than the polylactic acid resin were not used, and the bleed-out did not take place, so that evaluation was not carried out.

Test Example 4 < Evaluation of Secondary Formability Including Stretching Orientation >

The sheet in an amorphous state of each of the compositions was cut out into a rectangular shape of 12 cm × 10 cm with a thickness of 0.2 mm, and subjected to a biaxial simultaneous stretching to a stretching fold of 10.2 times with a table tenter testing machine manufactured by Iwamoto Seisakusho, under the conditions at a stretching temperature of from 55° to 60°C, and 80°C for Comparative Example 4 only, an afterheat time of 45 seconds, a stretching rate of 5 mm/s, and a holding time of 3 minutes with a stretching range of 10 cm each side, to prepare a biaxially stretched film having a thickness of 22 μm. A tensile test was conducted using the resulting biaxially stretched film to examine initial Young's modulus GPa and strength at break, including stress at break MPa. The tensile test was conducted as prescribed in JIS K 7127 with an autograph AGS-X, 1 kN, manufactured by Shimadzu Corporation. Here, it is judged that the greater the numerical values of stress at breaking point, the more excellent in the stretching orientation.

Test Example 5 <Evaluation of Secondary Formability Including Fittability >

A die for a lid part in Figure 1 of a commercially available vessel under the trade name of SHINO Yunomi 90, manufactured by C P CHEMICAL INCORPORATED was prepared, and placed in a single-step vacuum pressure forming machine manufactured by Wakisaka Seisakusho, FVS-500P WAKITEC.

The sheet in an amorphous state of each of the compositions was cut out into a square of 15 cm × 15 cm with a thickness of 0.4 mm. With a single-step vacuum pressure forming machine manufactured by Wakisaka Seisakusho, FVS-500P WAKITEC, the above-mentioned cut out sheet was placed along the guide, and the sheet was heated while varying a holding time in a heater section in which a heater temperature was set at 400°C until the temperature of the

sheet surface became a temperature as listed in Table 2. The sheet heated at each temperature was subjected to vacuum forming with upper and lower dies set at 90°C, and the sheet was held in the die for 10 seconds, and a vacuum formed article was taken out.

The lid obtained as mentioned above was fitted to a body part having ϕ 81 mm, a height of 51 mm, and the material being made of PP-containing low-foamable PS, of a commercially available vessel under the trade name of SHINO Yunomi 90, manufactured by C P CHEMICAL INCORPORATED. A case where the lid could be easily fitted was ranked "A"; and a case where the lid could not be fitted was ranked "B." As the temperature of the sheet surface, a surface temperature of the heated sheet was directly measured with a surface thermometer. The used die is shown in Figure 1.

Test Example 6 < Evaluation of Heat Resistance >

In the above-mentioned evaluation of fittability, after a formed article that could be easily fitted was immersed in hot water at 80°C for 30 seconds, a case where no changes in fittability took place was ranked "A," and a case where fittability underwent large changes was ranked "B."

Test Example 7 <Evaluation of Transparency >

In the above-mentioned evaluation of fittability, a part of a formed article that could be easily fitted was cut out, and Haze values were measured with a Haze meter Model HM-150, manufactured by MURAKAMI COLOR RESEARCH LABORATORY CO., Ltd., and the Haze values were used as indexes for transparency. Here, as to Comparative Example 4, since a formed article which could be easily fitted was not obtained, no measurements were conducted.

Test Example 8 <Evaluation of Crystallinity >

Parts of the sheets "before forming" and the samples after uniaxial stretching "after forming" used in the evaluation of the above-mentioned stretchability, the sheets "before forming" and the biaxially stretched film "after forming" used in the evaluation of the above-mentioned stretching orientation, and the sheets "before forming" and the vacuum formed article molded at a sheet surface temperature of 76°C "after forming" used in the evaluation of the above-mentioned fittability were cut out, and a relative degree of crystallinity was obtained. Specifically, the temperature was raised at 15°C/min from 25° to 200°C with DSC manufactured by Perkin-Elmer, and a relative degree of crystallinity was calculated from the following formula:

$$\text{Relative Degree of Crystallinity, \%} = ((\Delta Hm - \Delta Hc)/\Delta Hm) \times 100$$

wherein $\Delta Hc$ is an absolute value of cold crystallization enthalpy peaks, and $\Delta Hm$ is an absolute value of melt crystallization peaks.

[Table 2]

Table 2

| | | Ex. 2 | Ex. 3 | Comp. Ex. 3 | Comp. Ex. 4 |
|---|---|---|---|---|---|
| Polylactic Acid Resin Composition Components | | | | | |
| Polylactic Acid Resin | NW4032D | 100 | 100 | 100 | 100 |
| Plasticizer | Tris(ethoxyethoxyethyl) phosphate[1)] | 6 | 3 | - | - |
| | Diester of succinic acid and methyl triglycol[2)] | - | 5 | 10 | - |
| Crystal Nucleating Agent | Ethylenebis-12-hydroxystearic amide[3)] | 0.3 | 0.3 | 0.3 | - |
| Hydrolysis Inhibitor | Polycarbodiimide[4)] | 0.5 | 0.5 | 0.5 | - |

(continued)

| | | | | | | |
|---|---|---|---|---|---|---|
| Properties<br>Glass Transition Temperature (Tg, °C) | | | 42 | 42 | 41 | 58 |
| Cold Crystallization Temperature (Tc, °C) | | | 73 | 72 | 72 | 90-110 |
| Sheet in Amorphous State | | | | | | |
| Stretchability | Whitening Elongation (%) | | 400 | 400 | 320 | 300 |
| | Breaking Elongation (%) | | >450 | >450 | 420 | 400 |
| Crystallinity | Relative Crystallinity (%) | Before Stretching | 50 | 49 | 48 | 3 |
| | | After Stretching | 100 | 100 | 100 | 67 |
| Sheet in Crystalline State<br>Bleeding Resistance | | | A | A | A | - |
| Biaxially Stretched Film | | | | | | |
| Secondary Formability (Stretching Orientation) | Initial Young's Modulus (GPa) | | 4.6 | 4.3 | 3.9 | 2.6 |
| | Stress at Break MPa | | 128 | 120 | 102 | 70 |
| Crystallinity | Relative Crystallinity (%) | Before Stretching | 50 | 50 | 49 | 5 |
| | | After Stretching | 100 | 100 | 100 | 70 |
| Vacuum Formed Article | | | | | | |
| Secondary Formability (Fittability) | Temperature of Sheet Surface (°C) | 70 | A | B | B | B |
| | | 72 | A | A | B | B |
| | | 74 | A | A | A | B |
| | | 76 | A | A | A | B |
| | | 78 | A | A | B | B |
| | | 80 | A | A | B | B |
| | | 82 | A | B | B | B |
| Heat Resistance | | | A | A | A | B |
| Transparency (Haze%) | | | 6.0 | 6.0 | 6.0 | Undeter-minable |
| Crystallinity | Relative Crystallinity (%) | Before Forming | 51 | 50 | 49 | 5 |
| | | After Forming | 100 | 100 | 100 | 20 |

* The amount used in each of the raw materials is expressed as an amount used (parts by weight) based on 100 parts by weight of the polylactic acid resin.
1) Tris(ethoxyethoxyethyl) phosphate obtained in Production Example 1 of Plasticizer
2) Diester of succinic acid and methyl triglycol obtained in Production Example 2 of Plasticizer
3) Ethylenebis-12-hydroxystearic amide manufactured by Nippon Kasei Chemical Co., Ltd. under the trade name: SLIPACKS H
4) Polycarbodiimide manufactured by Nisshin Boseki under the trade name of Carbodilite LA-1

From Table 2, Examples 2 and 3 where the resin compositions containing a polyether-form phosphoric ester did not show any bleed out at all in a non-stretched sheet in a crystalline state, having a thickness of 0.4 mm, in the same manner as Comparative Example 3 where a resin composition only contained an already known plasticizer a succinate ester, so that the resin compositions had favorable bleeding resistance. In addition, the resin composition of Example 2 had a high elongation fold at which whitening took place, and did not break even at the detection limit of the stretching apparatus, thereby showing a high stretchability. This was also the same in Example 3 where the phosphoric ester was used together with an already known plasticizer which was a succinate ester, suggesting that stretchability can be given by adding the polyether-form phosphoric ester. Also crystallization due to stretching was sufficient.

In addition, Examples 2 and 3 where the polylactic acid resin compositions contained a polyether-form phosphoric ester had facilitation in biaxial stretching and also showed high mechanical properties including initial Young's modulus and stress at break, thereby showing favorable physical properties as a stretched film. Also crystallization due to stretching was sufficient.

Furthermore, in the cases of Examples 2 and 3 where the polylactic acid resin compositions contained a polyether- form phosphoric ester, even when the holding time in the heating zone varied so that the temperature of the sheet surface varied, a temperature range, i.e. forming temperature range, in which sufficient forming property was obtained was wide, and heat resistance, transparency, and crystallinity of the formed article obtained within that range were favorable.

Example 4 and Comparative Examples 5 and 6

A polyether-form phosphoric ester tris(ethoxyethoxyethyl) phosphate, a phosphoric triester tris(butoxyethyl) phosphate, or a phosphate having a long-chained lauryl group dilauryl butyl phosphate was added in an amount listed in Table 3, based on 100 parts by weight of a polylactic acid NW4032D manufactured by Nature Works, and a polylactic acid resin composition was prepared with the same apparatus as in Example 2 at a kneading temperature of 180°C, a rotational speed of 90 rotations per minute, and a discharge rate of 10 kg/h.

A sheet in a crystalline state was prepared in the same manner as in Example 2 using the composition obtained, and bleeding resistance was evaluated in the same manner as in Test Example 3. In addition, the crystallinity of the sheet in a crystalline state was confirmed in the same manner as in Test Example 8. The results are shown in Table 3.

[Table 3]

Table 3

| | | Ex. 4 | Comp. Ex. 5 | Comp. Ex. 6 |
|---|---|---|---|---|
| Components<br>Polylactic Acid Resin NW4032D | | 100 | 100 | 100 |
| Plasticizer | Tris(ethoxyethoxyethyl) phosphate 1) | 10 | - | - |
| | Tris(butoxyethyl) phosphate 2) | - | 10 | - |
| | Dilauryl butyl phosphate 3) | - | - | 10 |
| Properties<br>Bleeding Resistance | | A | B | C |
| Crystallinity | Relative Crystallinity (%) | 100 | 100 | 100 |

* The amount used in each of the raw materials is expressed as an amount used (parts by weight) based on 100 parts by weight of the polylactic acid resin.
1) Tris(ethoxyethoxyethyl) phosphate obtained in Production Example 1 of Plasticizer
2) Tris(butoxyethyl) phosphate, a reagent manufactured by Wako Pure Chemicals Industries, Ltd.
3) Dilauryl butyl phosphate obtained in Production Example 3 of Plasticizer

As a result, in Comparative Examples 5 and 6 where tris(butoxyethyl) phosphate and dilauryl butyl phosphate were used, sufficient bleeding resistance could not be found.

Examples 5 to 9

Raw materials as listed in Table 4 were added in amounts listed in Table 4, based on 100 parts by weight of a polylactic acid NW4032D manufactured by Nature Works as a polylactic acid resin, and a polylactic acid resin composition was prepared in the same manner as in Example 2. The same evaluations of Test Examples 1 to 8 as in Examples 2 and 3 and Comparative Examples 3 and 4 were carried out using the polylactic acid resin compositions obtained. The results are shown in Table 4.

[Table 4]

Table 4

| | | | Ex. 5 | Ex. 6 | Ex. 7 | Ex. 8 | Ex. 9 |
|---|---|---|---|---|---|---|---|
| Polylactic Acid Resin Composition Components | | | | | | | |
| Polylactic Acid Resin | NW4032D | | 100 | 100 | 100 | 100 | 100 |
| Plasticizer | Tris(methoxyethoxyethyl) phosphate[1] | | 7 | - | - | - | - |
| | Tris(ethoxyethoxyethoxyethyl) phosphate[2] | | - | 7 | - | - | - |
| | Tris(propoxyethoxyethyl) phosphate[3] | | - | - | 7 | - | - |
| | Tris(butoxyethoxyethyl) phosphate [4] | | - | - | - | 8 | - |
| | {Bis(ethoxyethoxyethyl) } {butoxyethoxyethyl} phosphate[5] | | - | - | - | - | 7 |
| Crystal Nucleating Agent | Ethylenebis-12-hydroxystearic amide[6] | | 0.3 | 0.3 | 0.3 | 0.3 | 0.3 |
| Hydrolysis Inhibitor | Polycarbodiimide[7] | | 0.5 | 0.5 | 0.5 | 0.5 | 0.5 |
| Properties | | | | | | | |
| Glass Transition Temperature (Tg, °C) | | | 42 | 42 | 42 | 43 | 42 |
| Cold Crystallization Temperature (Tc, °C) | | | 73 | 73 | 72 | 73 | 72 |
| Sheet in Amorphous State | | | | | | | |
| Stretchability | Whitening Elongation (%) | | 380 | 390 | 390 | 380 | 390 |
| | Breaking Elongation (%) | | >450 | >450 | >450 | >450 | >450 |
| Crystallinity | Relative Crystallinity (%) | Before Stretching | 50 | 49 | 50 | 49 | 49 |
| | | After Stretching | 100 | 100 | 100 | 100 | 100 |
| Sheet in Crystalline State | | | | | | | |
| Bleeding Resistance | | | A | A | A | A | A |
| Biaxially Stretched Film | | | | | | | |
| Secondary Formability (Stretching orientation) | Initial Young's Modulus (GPa) | | 4.1 | 4.4 | 4.4 | 4.0 | 4.1 |
| | Stress at Break (MPa) | | 116 | 124 | 124 | 110 | 116 |
| Crystallinity | Relative Crystallinity (%) | Before Stretching | 49 | 50 | 50 | 49 | 49 |
| | | After Stretching | 100 | 100 | 100 | 100 | 100 |
| Vacuum Formed Article | | | | | | | |
| Secondary Formability (Fittability) | Temperature of Sheet Surface (°C) | 70 | B | B | B | B | B |
| | | 72 | B | A | A | B | B |
| | | 74 | A | A | A | A | A |
| | | 76 | A | A | A | A | A |
| | | 78 | A | A | A | A | A |
| | | 80 | A | A | A | B | A |
| | | 82 | B | A | A | B | B |
| Heat Resistance | | | A | A | A | A | A |

(continued)

| | | | | | | | |
|---|---|---|---|---|---|---|---|
| Vacuum Formed Article | | | | | | | |
| Transparency (Haze%) | | | 6.0 | 6.0 | 6.0 | 6.0 | 6.0 |
| Crystallinity | Relative Crystallinity (%) | Before Forming | 51 | 49 | 50 | 49 | 49 |
| | | After Forming | 100 | 100 | 100 | 100 | 100 |

* The amount used in each of the raw materials is expressed as an amount used (parts by weight) based on 100 parts by weight of the polylactic acid resin.
1) Tris(methoxyethoxyethyl) phosphate obtained in Production Example 4 of Plasticizer
2) Tris(ethoxyethoxyethoxyethyl) phosphate obtained in Production Example 5 of Plasticizer
3) Tris(propoxyethoxyethyl) phosphate obtained in Production Example 6 of Plasticizer
4) Tris(butoxyethoxyethyl) phosphate obtained in Production Example 7 of Plasticizer
5) {Bis(ethoxyethoxyethyl) } {butoxyethoxyethyl} phosphate obtained in Production Example 8 of Plasticizer
6) Ethylenebis-12-hydroxystearic amide manufactured by Nippon Kasei Chemical Co., Ltd. under the trade name: SLIPACKS H
7) Polycarbodiimide manufactured by Nisshin Boseki under the trade name of Carbodilite LA-1

From Table 4, Examples 5 to 9 where the resin compositions contained a polyether-form phosphoric ester of the present invention had favorable bleeding resistance, and high elongation folds at which whitening took place, and did not break even at the detection limit of the stretching apparatus, thereby showing a high stretchability, in the same manner as tris(ethoxyethoxyethyl) phosphate in Example 2 shown in Table 2, even in a compound where the alkyl groups in $R^1$, $R^2$, and $R^3$ in the formula (I) were changed to methyl groups in Example 5, propyl groups in Example 7, or butyl groups in Example 8, and a compound where the number of moles of EO added was changed to 9 in Example 6, from $m + n + p = 6$ of Example 2.

In addition, the compounds of Examples 5 to 9 had facilitation in biaxial stretching and also showed high mechanical properties including initial Young's modulus and stress at break, thereby showing favorable physical properties as a stretched film. Also crystallization due to stretching was sufficient.

Furthermore, in the compounds of Examples 5 to 9, even when the holding time in the heating zone varied so that the temperature of the sheet surface varied, a temperature range, i.e. forming temperature range, in which sufficient forming property is obtained was wide, and heat resistance, transparency, and crystallinity of the formed article obtained within that range were favorable.

From the results of Tables 2 and 4, among the compounds of the present invention, compounds in which each of $R^1$, $R^2$, and $R^3$ in the formula (I) is an ethyl group or a propyl group gave the results of more excellent secondary formability.

Examples 10 to 15

The compounds of the present invention as listed in Table 5 were added in an amount of 15 parts by weight, based on 100 parts by weight of a polylactic acid NW4032D manufactured by Nature Works, and a polylactic acid resin composition was prepared with the same apparatus as in Example 2 at a kneading temperature of 180°C, a rotational speed of 90 rotations per minute, and a discharge rate of 10 kg/h.

A sheet in a crystalline state was prepared in the same manner as in Example 2 using the composition obtained, and bleeding resistance was evaluated in the same manner as in Test Example 3. In addition, the crystallinity of the sheet in a crystalline state was confirmed in the same manner as in Test Example 8. The results are shown in Table 5.

Table 5

| | | Ex. 10 | Ex. 11 | Ex. 12 | Ex. 13 | Ex. 14 | Ex. 15 |
|---|---|---|---|---|---|---|---|
| Components | | | | | | | |
| Polylactic Acid Resin | NW4032D | 100 | 100 | 100 | 100 | 100 | 100 |

(continued)

| | | Ex. 10 | Ex. 11 | Ex. 12 | Ex. 13 | Ex. 14 | Ex. 15 |
|---|---|---|---|---|---|---|---|
| Components | | | | | | | |
| Plasticizer | Tris(methoxyethoxyethyl) phosphate1) | 15 | - | - | - | - | - |
| | Tris(ethoxyethoxyethyl) phosphate2) | - | 15 | - | - | - | - |
| | Tris(ethoxyethoxyethoxyethyl) phosphate3) | - | - | 15 | - | - | - |
| | Tris(propoxyethoxyethyl) phosphate4) | - | - | - | 15 | - | - |
| | Tris(butoxyethoxyethyl) phosphate5) | - | - | - | - | 15 | - |
| | {Bis(ethoxyethoxyethyl) } {butoxyethoxyethyl} phosphate6) | - | - | - | - | - | 15 |
| Properties | | | | | | | |
| Bleeding Resistance | | B | A | A | A | B | B |
| Crystallinity | Relative Crystallinity (%) | 100 | 100 | 100 | 100 | 100 | 100 |

* The amount used in each of the raw materials is expressed as an amount used (parts by weight) based on 100 parts by weight of the polylactic acid resin.
1) Tris(methoxyethoxyethyl) phosphate obtained in Production Example 4 of Plasticizer
2) Tris(ethoxyethoxyethyl) phosphate obtained in Production Example 1 of Plasticizer
3) Tris(ethoxyethoxyethoxyethyl) phosphate obtained in Production Example 5 of Plasticizer
4) Tris(propoxyethoxyethyl) phosphate obtained in Production Example 6 of Plasticizer
5) Tris(butoxyethoxyethyl) phosphate obtained in Production Example 7 of Plasticizer
6) {Bis(ethoxyethoxyethyl) } {butoxyethoxyethyl} phosphate obtained in Production Example 8 of Plasticizer

From the results of Table 5, among the compounds of the present invention, Examples 11 to 13 where compounds in which $R^1$, $R^2$, and $R^3$ in the formula (I) are an ethyl group or a propyl group gave favorable results in bleeding resistance without being dependent on the amounts added.

Example_16

The raw materials as listed in Table 6 were added in amounts listed in Table 6, based on 100 parts by weight of a polylactic acid NW4032D manufactured by Nature Works as a polylactic acid resin, and a polylactic acid resin composition was prepared with a twin-screw extruder kneader HK-25D manufactured by PARKER at a kneading temperature of 180°C, a rotational speed of 90 rotations per minute, and a discharge rate of 10 kg/h.
A sheet in an amorphous state was prepared in the same manner as in Example 2 using the polylactic acid resin composition obtained, and the properties were evaluated for the polylactic acid resin compositions and the sheets in accordance with the following Test Examples 9 to 12. The results are shown in Table 6.

Test Example 9 < Evaluation of Crystallinity >

A part of an amorphous sheet before stretching used in the evaluation of the secondary formability described later was cut out to obtain a relative crystallinity in the same manner as in Test Example 8.

Test Example 10 < Evaluation of Secondary Formability Including Heat Shrinking Property >

The sheet in an amorphous state was cut out into a square shape of 12 cm × 12 cm with a thickness of 0.2 mm, and subjected to a uniaxial stretching with a table tenter testing machine manufactured by Iwamoto Seisakusho under conditions of a stretching temperature of from 55° to 60°C, an afterheat time of 45 seconds, a stretching rate of 5 mm/s to a stretching fold of up to 4 times at a set width of 10 cm with a stretching range of a square of 10 cm each side, and immediately cooled, to prepare a thermally shrinking film having a thickness of 50 μm to which thermal fixing

is not substantially carried out. Using the thermally shrinking film obtained, a test piece having a length of 140 mm and a width of 80 mm was cut with the testing orientation as a length, and guiding lines of a length of 100 mm in that testing direction were drawn. The test piece was immersed in a hot water bath at 50°C and 80°C for 10 seconds, and cooled in a water bath at 25°C for 5 seconds. Thereafter, the size between the guide lines was measured, and shrinkage rate at each temperature was calculated in accordance with the following formula to evaluate thermally shrinking property.

$$\text{Shrinkage Rate (\%)} = 100 \times \{\text{Size (mm) Before Shrinkage} - \text{Size (mm) After Shrinkage}\}/\text{Size Before Shrinkage (mm)}$$

Test Example 11 <Evaluation of Transparency>

A part of a thermally shrinking film used in the evaluation of the secondary formability described above was cut out, and Haze value was measured in the same manner as in Test Example 7, which was used as an index for transparency.

Test Example 12 <Evaluation of Anti-Breaking Property>

In accordance with JIS K 7127, a tensile test was conducted using an autograph AGS-X, 1 kN manufactured by Shimadzu Corporation to measure elongation at break %, to be used as a substitutive evaluation for anti-breaking property. It is shown that the shrinkable film having a low elongation had a low anti-breaking property, the shrinkable film having a high elongation had a high anti-breaking property. Those having elongation at break of 50% or more had favorable anti-breaking property, those of 10% or more and less than 50% had slightly favorable anti-breaking property, and those at less than 10% were unacceptable.
[Table 6]

Table 6

| | | | Ex. 16 |
|---|---|---|---|
| Polylactic Acid Resin Composition Components | | | |
| Polylactic Acid Resin | NW4032D | | 100 |
| Plasticizer | Tris(ethoxyethoxyethyl) phosphate1) | | 6 |
| Amorphous Sheet | | | |
| Crystallinity | Relative Crystallinity (%) Before Stretching | | 50 |
| Thermally Shrinking Film | | | |
| Secondary Formability | | 50°C | 0.3 |
| (Thermally Shrinking Property) | Shrinkage Rate (%) | 80°C | 40 |
| Transparency (Haze%) | | | 0.6 |
| Anti-Breaking Property (%) | | | 127 |

* The amount used in each of the raw materials is expressed as an amount used (parts by weight) based on 100 parts by weight of the polylactic acid resin.
1) Tris(ethoxyethoxyethyl) phosphate obtained in Production Example of Plasticizer

From the results of Table 6, the polylactic acid resin composition containing a compound of the present invention had facilitation in stretching, showed thermally shrinking properties of giving a sufficient shrinkage rate at 80°C while hardly shrinking at 50°C, and had also excellent transparency and anti-breaking property, thereby showing excellent physical properties as a thermally shrinking film.
The polylactic acid resin composition of the present invention can be suitably used in various industrial applications such as daily sundries, household electric appliance parts, packaging materials for household electric appliance parts, and automobile parts.
The present invention can relate to any one of the followings:

<1> A polylactic acid resin composition containing:

a polylactic acid resin; and
a compound represented by the formula (I):

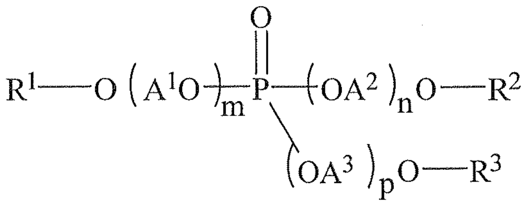

(I)

wherein each of $R^1$, $R^2$, and $R^3$ is independently an alkyl group having from 1 to 4 carbon atoms; each of $A^1$, $A^2$, and $A^3$ is independently an alkylene group having 2 or 3 carbon atoms; each of m, n, and p is independently a positive number showing an average number of moles of oxyalkylene groups added, wherein m + n + p satisfies the number that exceeds 3 and is equal to or less than 12,
the compound being contained in an amount of from 0.1 to 30 parts by weight, based on 100 parts by weight of the polylactic acid resin.

<2> The polylactic acid resin composition according to <1>, wherein each of $R^1$, $R^2$, and $R^3$ in the formula (I) is independently an alkyl group having 2 to 3 carbon atoms.
<3> The polylactic acid resin composition according to <1>, wherein each of $R^1$, $R^2$, and $R^3$ in the formula (I) is preferably independently a methyl group, an ethyl group, a propyl group, an isopropyl group, a butyl group, or an isobutyl group, more preferably independently an ethyl group, a propyl group, or a butyl group, even more preferably independently an ethyl group or a propyl group, and still even more preferably all being ethyl groups or propyl groups.
<4> The polylactic acid resin composition according to any one of <1> to <3>, wherein m + n + p in the formula (I) preferably satisfies the number that exceeds 3 and is less than 12, more preferably satisfies the number that exceeds 4 and is less than 12, and even more preferably satisfies the number that is 6 or more and 9 or less.
<5> The polylactic acid resin composition according to any one of <1> to <4>, wherein each of $A^1$, $A^2$, or $A^3$ in the formula (I) is preferably independently an ethylene group, an n-propylene group, or an isopropylene group, more preferably all being ethylene groups, n-propylene groups, or isopropylene groups, and even more preferably all being ethylene groups.
<6> The polylactic acid resin composition according to any one of <1> to <5>, wherein the compound represented by the formula (I) is preferably a symmetric polyether-form phosphoric triester or an asymmetric polyether-form phosphoric triester, and more preferably a symmetric polyether-form phosphoric triester.
<7> The polylactic acid resin composition according to any one of <1> to <5>, wherein the compound represented by the formula (I) is preferably tris (ethoxyethoxyethyl) phosphate, tris (methoxyethoxyethyl) phosphate, tris (propoxyethoxyethyl) phosphate, tris (butoxyethoxyethyl) phosphate, tris (methoxyethoxyethoxyethyl) phosphate, tris (ethoxyethoxyethoxyethyl) phosphate, tris (propoxyethoxyethoxyethyl) phosphate, bis (ethoxyethoxyethyl) methoxyethoxyethoxyethyl phosphate, bis (methoxyethoxyethoxyethyl) ethoxyethoxyethyl phosphate, bis (ethoxyethoxyethyl) {butoxyethoxyethyl} phosphate, or an asymmetric polyether- form phosphoric ester obtained by phosphoric triesterification of a mixture of a polyoxyethylene adduct or a polyoxypropylene adduct of an alcohol having 1 to 4 carbon atoms to satisfy the formula (I), more preferably tris (ethoxyethoxyethyl) phosphate, tris (propoxyethoxyethyl) phosphate, tris (ethoxyethoxyethoxyethyl) phosphate, or tris (propoxyethoxyethoxyethyl) phosphate, and even more preferably tris (ethoxyethoxyethyl) phosphate.
<8> The polylactic acid resin composition according to any one of <1> to <7>, wherein the compound represented by the formula (I) is contained in an amount of preferably from 0.5 to 30 parts by weight, more preferably from 1.0 to 10 parts by weight, even more preferably from 2.0 to 8.0 parts by weight, and still even more preferably from 3.0 to 7.0 parts by weight, based on 100 parts by weight of the polylactic acid resin.
<9> The polylactic acid resin composition according to any one of <1> to <8>, further containing a crystal nucleating agent.
<10> The polylactic acid resin composition according to <9>, wherein the crystal nucleating agent is preferably an organic crystal nucleating agent, more preferably an alkylenebis fatty acid amide, and even more preferably an alkylenebis hydroxyfatty acid amide.
<11> The polylactic acid resin composition according to <9>, wherein the crystal nucleating agent is preferably an organic crystal nucleating agent, more preferably ethylenebis stearic amide, ethylenebis oleic amide, propylenebis fatty acid amides, and butylenebis fatty acid amides, and even more preferably ethylenebis-12-hydroxysteraric amide.
<12> A sheet containing a polylactic acid resin composition as defined in any one of <1> to <11>, the sheet having

a relative degree of crystallinity of 80% or less.

<13> The sheet according to <12>, obtainable by subjecting the polylactic acid resin composition according to any one of <1> to <11> to extrusion forming or pressure forming.

<14> The sheet according to <12> or <13>, wherein the thickness is preferably from 0.1 to 1.5 mm, more preferably from 0.2 to 1.4 mm, and even more preferably from 0.3 to 1.2 mm.

<15> A film produced by biaxially stretching a sheet as defined in any one of <12> to <14>.

<16> A polylactic acid resin formed article obtainable by vacuum forming or pressure forming a sheet as defined in any one of <12> to <14>.

<17> A thermally shrinkable film formed by stretching a sheet as defined in any one of <12> to <14>.

<18> A method for secondary forming of a sheet, characterized by biaxially stretching a sheet as defined in any one of <12> to <14>.

<19> A method for secondary forming of a sheet, characterized by vacuum forming or pressure forming a sheet as defined in any one of <12> to <14>.

<20> A method for secondary forming of a sheet, characterized by uniaxially stretching a sheet as defined in any one of <12> to <14>.

<21> A wrapping material made of a film as defined in <15>.

<22> A wrapping material made of a polylactic acid resin formed article as defined in <16>.

<23> A wrapping material made of a thermally shrinkable film as defined in <17>.

## Claims

1. A polylactic acid resin composition comprising:

   a polylactic acid resin; and
   a compound represented by the formula (I):

   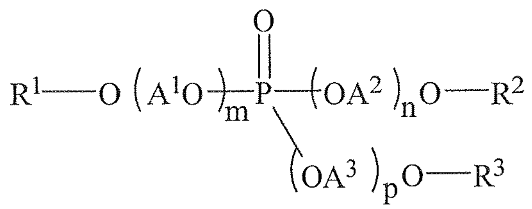

   (I)

   wherein each of $R^1$, $R^2$, and $R^3$ is independently an alkyl group having from 1 to 4 carbon atoms; each of $A^1$, $A^2$, and $A^3$ is independently an alkylene group having 2 or 3 carbon atoms; each of m, n, and p is independently a positive number showing an average number of moles of oxyalkylene groups added, wherein m + n + p satisfies the number that exceeds 3 and is equal to or less than 12,
   the compound being contained in an amount of from 0.1 to 30 parts by weight, based on 100 parts by weight of the polylactic acid resin.

2. The polylactic acid resin composition according to claim 1, wherein each of $R^1$, $R^2$, and $R^3$ in the formula (I) is independently an alkyl group having 2 to 3 carbon atoms.

3. The polylactic acid resin composition according to claim 1 or 2, wherein m + n + p satisfies the number that is 6 or more and 9 or less.

4. The polylactic acid resin composition according to any one of claims 1 to 3, wherein $A^1$, $A^2$, or $A^3$ is an ethylene group.

5. The polylactic acid resin composition according to any one of claims 1 to 4, wherein the compound represented by the formula (I) is tris(ethoxyethoxyethyl) phosphate.

6. The polylactic acid resin composition according to any one of claims 1 to 5, wherein the compound represented by the formula (I) is contained in an amount of from 1.0 to 10 parts by weight, based on 100 parts by weight of the polylactic acid resin.

**7.** The polylactic acid resin composition according to any one of claims 1 to 6, further comprising a crystal nucleating agent.

**8.** A sheet comprising a polylactic acid resin composition as defined in any one of claims 1 to 7, the sheet having a relative degree of crystallinity of 80% or less.

**9.** A film produced by biaxially stretching a sheet as defined in claim 8.

**10.** A polylactic acid resin formed article obtainable by vacuum forming or pressure forming a sheet as defined in claim 8.

**11.** A method for secondary forming of a sheet, **characterized by** biaxially stretching a sheet as defined in claim 8.

**12.** A method for secondary forming of a sheet, **characterized by** vacuum forming or pressure forming a sheet as defined in claim 8.

**13.** A wrapping material made of a film as defined in claim 9.

**14.** A wrapping material made of a polylactic acid resin formed article as defined in claim 10.

**15.** A thermally shrinkable film formed by stretching a sheet as defined in claim 8.

**16.** A wrapping material made of a thermally shrinkable film as defined in claim 15.

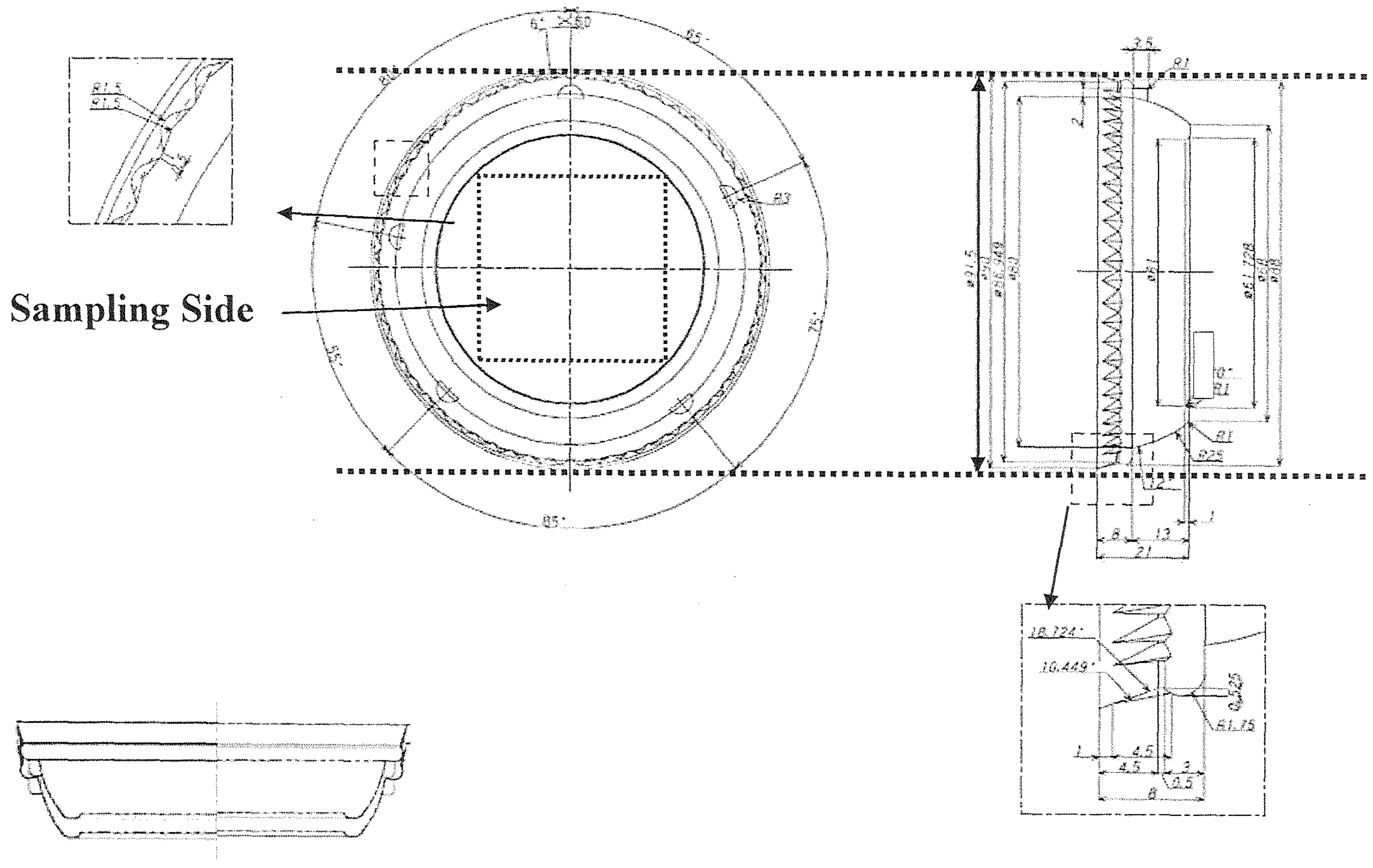


PILED VIEW
(CROSS-SECTIONAL VIEW)

# FIG. 1 VACUUM-FORMED ARTICLE (CUP-SHAPED)

## INTERNATIONAL SEARCH REPORT

International application No.
PCT/JP2011/078650

A. CLASSIFICATION OF SUBJECT MATTER
*C08L67/04*(2006.01)i, *B29C51/10*(2006.01)i, *B29C55/12*(2006.01)i, *C08J5/18*(2006.01)i, *C08K5/521*(2006.01)i, *C08L101/16*(2006.01)n

According to International Patent Classification (IPC) or to both national classification and IPC

B. FIELDS SEARCHED

Minimum documentation searched (classification system followed by classification symbols)
C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2009-249532 A (Kao Corp.), 29 October 2009 (29.10.2009), entire text (Family: none) | 1-16 |
| A | JP 2008-150492 A (Daicel Polymer Ltd.), 03 July 2008 (03.07.2008), entire text (Family: none) | 1-16 |
| A | JP 2008-247956 A (DIC Corp.), 16 October 2008 (16.10.2008), entire text (Family: none) | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 January, 2012 (10.01.12) | 24 January, 2012 (24.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/078650

C (Continuation). DOCUMENTS CONSIDERED TO BE RELEVANT

| Category* | Citation of document, with indication, where appropriate, of the relevant passages | Relevant to claim No. |
|---|---|---|
| A | WO 2005/97894 A1 (Nissan Chemical Industries, Ltd.),<br>20 October 2005 (20.10.2005),<br>entire text<br>& US 2007/0299170 A1 & EP 1736510 A1 | 1-16 |
| A | JP 2007-191620 A (Teijin Chemicals Ltd.),<br>02 August 2007 (02.08.2007),<br>entire text<br>(Family: none) | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002179899 A
- JP 2007112868 A
- JP HEI1017581 B
- JP 2006176748 A
- JP HEI8231565 B


### Non-patent literature cited in the description


- Firumu wo Tsukuru. 15 February 1993
- *DIC Technical Review No. 10,* 2004, 5